Europäisches Patentamt

European Patent Office

Office européen des brevets

(19)

(11) Veröffentlichungsnummer : **0 184 618**
**B1**

(12) **EUROPÄISCHE PATENTSCHRIFT**

(45) Veröffentlichungstag der Patentschrift :
01.02.89

(51) Int. Cl.⁴ : **H 04 B 7/005**, H 04 B 3/14

(21) Anmeldenummer : 85111128.6

(22) Anmeldetag : 04.09.85

(54) Verfahren zum Steuern eines Resonanzentzerrers.

(30) Priorität : 30.11.84 DE 3443696

(43) Veröffentlichungstag der Anmeldung :
18.06.86 Patentblatt 86/25

(45) Bekanntmachung des Hinweises auf die Patenterteilung : 01.02.89 Patentblatt 89/05

(84) Benannte Vertragsstaaten :
AT CH DE LI NL

(56) Entgegenhaltungen :
US--A-- 4 466 133
THE TRANSACTIONS OF THE IECE OF JAPAN, Band E-67, Nr. 2. Februar 1984, Seiten 101-108, Tokyo, JP; T. YOSHIDA et al.: "An adaptive variableresonance equalizer for a 16 QAM radio system"
PATENTS ABSTRACTS OF JAPAN, Band 8, Nr. 139 (E-253) [1576], 28. Juni 1984, Seite 42 E 253; & JP - A - 59 47 851

(73) Patentinhaber : ANT Nachrichtentechnik GmbH
Gerberstrasse 33
D-7150 Backnang (DE)

(72) Erfinder : Heer, Roland, Dipl.-Ing.
Berliner Ring 48
D-7150 Backnang (DE)

EP 0 184 618 B1

**Beschreibung**

Die vorliegende Erfindung betrifft ein Verfahren zum automatischen Steuern der Resonanzfrequenz und Güte eines Resonanzentzerrers, wobei aus dem übertragenen Signalspektrum ·am Entzerrerausgang Proben aus mindestens drei verschiedenen vorbestimmten Frequenzbereichen entnommen werden, von denen der eine in der Mitte des übertragenen Signalspektrums liegt und die anderen symmetrisch zu beiden Seiten der Mittenfrequenz liegen, dann aus zwei von den beiden Proben der symmetrisch zur Mittenfrequenz liegenden Frequenzbereiche abgeleiteten Steuergrößen eine erste Differenz ($U_4$) gebildet wird und außerdem aus dem Mittelwert der beiden Steuergrößen und aus einer Steuergröße, die aus der Probe des in der Mitte des Signalspektrums liegenden Frequenzbereiches abgeleitet ist, eine zweite Differenz gebildet wird.

Resonanzentzerrer werden z. B. in Digitalrichtfunksystemen eingesetzt, um die durch Selektivschwund im Funkfeld entstandenen Dämpfungsverzerrungen im Übertragungskanal auszugleichen.

Ein einleitend dargelegtes Verfahren zum automatischen Steuern der Resonanzfrequenz und der Güte eines Resonanzentzerrers ist aus THE TRANSACTIONs OF THE IECE OF JAPAN, Band E-67, Nr. 2. Februar 1984, Seiten 101-108, Tokyo JP ; T. YOSHIDA et al. : « An adaptive variableresonance equalizer for a 16 QAM radio system » bekannt.

Ebenso geht aus dem Aufsatz « Adaptive equalization structures in high capacity digital radio » von L. Moreno und M. Salerno bekannt, der in IEEE 1984, CH 2028-9/84/000 S. 993-997 veröffentlicht worden ist, eine Steuerung für einen Resonanzentzerrer unter Einsatz eines Mikroprozessors hervor.

Der Erfindung liegt nun die Aufgabe zugrunde, ein Verfahren der eingangs genannten Art anzugeben, das mit möglichst geringem Aufwand die verschiedensten Frequenzgangverzerrungen zu entzerren vermag.

Erfindungsgemäß wird diese Aufgabe durch die Merkmale des Patentanspruches 1 gelöst.

Eine zweckmäßige Ausführung der Erfindung geht aus dem Unteranspruch hervor.

Anhand eines in der Zeichnung dargestellten Ausführungsbeispiels wird nun die Erfindung näher erläutert. Es zeigen :

Figur 1 ein Blockschaltbild einer Steuerung für den Resonanzentzerrer,

Figur 2 ein unverzerrtes Frequenzspektrum des Übertragungskanals und

Figuren 3, 4 und 5 Frequenzspektren für drei verschiedene im Übertragungskanal aufgetretene Dämpfungsverzerrungen.

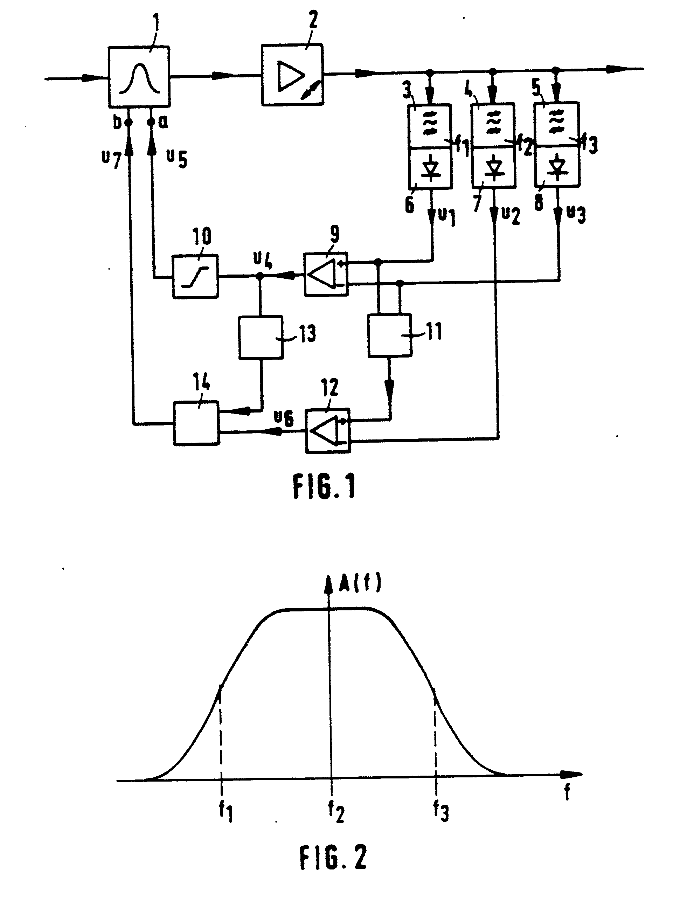

Das in Figur 1 dargestellte Blockschaltbild enthält im Übertragungspfad einen Resonanzentzerrer 1 mit steuerbarer Resonanzfrequenz $f_r$ und steuerbarer Güte Q. Der Resonanzentzerrer hat einen Eingang a für ein die Resonanzfrequenz $f_r$

steuerndes Signal $U_5$ und einen Eingang b für ein die Güte Q steuerndes Signal $U_7$.

An den Resonanzentzerrer 1 schließt sich ein geregelter Verstärker 2 an, der an seinem Ausgang ein pegelkonstantes Signal liefert.

Aus dem übertragenen, verzerrten Signalspektrum werden am Ausgang des Verstärkers mittels dreier schmaler Bandpässe 3, 4 und 5 drei Spektralbereiche $f_1$, $f_2$ und $f_3$ herausgefiltert und mit nachfolgenden Gleichrichtern 6, 7 und 8 Spannungen $U_1$, $U_2$ und $U_3$ gewonnen, die der spektralen Leistungsdichte der drei aus dem Signalspektrum entnommenen Proben der Spektralbereiche $f_1$, $f_2$ und $f_3$ annähernd entsprechen. Wie das in Figur 2 dargestellte unverzerrte Frequenzspektrum A(f) des Verstärkerausgangssignals zu erkennen gibt, liegt der herausgefilterte Spektralbereich $f_2$ in der Mitte des Spektrums A(f) und die beiden anderen Spektralbereiche $f_1$ und $f_3$ befinden sich symmetrisch zu beiden Seiten der Mittenfrequenz.

Aus den beiden Spannungen $U_1$ und $U_3$, welche den außerhalb der Mitte des Frequenzspektrums liegenden Spektralbereichen $f_1$ und $f_3$ zugeordnet sind, wird in einer Subtraktionsschaltung 9 die Differenz gebildet. Das Differenzsignal $U_4$ wird dann einem Begrenzer 10 zugeführt und das Ausgangssignal $U_5$ des Begrenzers zur Steuerung der Resonanzfrequenz $f_r$ an den Eingang a des Resonanzentzerrers 1 gegeben. Der Begrenzer 10 ist so einzustellen, daß sein Ausgangssignal $U_5$ die Resonanzfrequenz $f_r$ des Resonanzentzerrers 1 nur innerhalb des Frequenzbereichs ändert, der von den symmetrisch zur Mittenfrequenz $f_2$ liegenden Frequenzen $f_1$ und $f_3$ eingegrenzt ist.

In einem Schaltblock 11 wird aus den beiden Spannungen $U_1$ und $U_3$ der Mittelwert gebildet. Aus diesem Mittelwert und der Spannung $U_2$, welche dem in der Mitte des Frequenzspektrums liegenden Spektralbereich $f_2$ zugeordnet ist, wird dann in einer Subtraktionsschaltung 12 die Differenz $U_6$ ermittelt.

Es wird nun entweder dieses Differenzsignal $U_6$ oder das am Ausgang der Subtraktionsschaltung 9 zur Verfügung stehende Differenzsignal $U_4$, von dem in einem Schaltblock 13 der Betrag gebildet wird, als Steuersignal $U_7$ für die Güte Q an den Eingang b des Resonanzentzerrers 1 durchgeschaltet. Ein Schaltblock 14, an dessen Eingängen das Differenzsignal $U_6$ und der Betrag des Differenzsignals $U_4$ anliegen, schaltet von diesen beiden Signalen jeweils das mit der größten Spannung an den Signaleingang b des Resonanzentzerrers 1 durch.

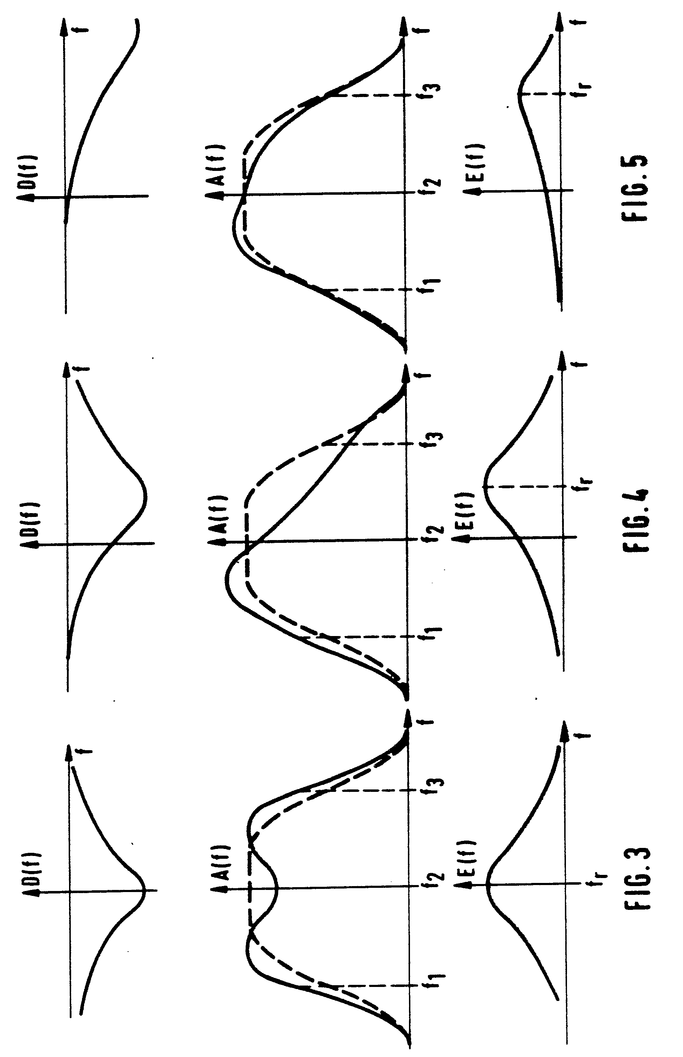

In den Figuren 3, 4 und 5 sind die durch einen Selektivschwund im Übertragungskanal entstandene Dämpfungsverzerrung D(f), das Frequenzspektrum A(f) (wobei die durchgezogene Kurve das verzerrte und die strichlierte Kurve das unverzerrte Spektrum wiedergibt) und der Amplitudenfrequenzgang E(f) des Resonanzentzerrers dargestellt.

Anhand verschiedener Dämpfungsverzerrungen soll nachfolgend die Wirkung der erfindungsgemäßen Entzerrersteuerung beschrieben werden.

Bei dem in Figur 3 gezeigten Fall liegt das Maximum der Dämpfungsverzerrung D(f) gerade bei der Mittenfrequenz $f_2$ des Frequenzspektrums A(f). Das verzerrte Frequenzspektrum A(f) ist dadurch achsialsymmetrisch zur Mittenfrequenz $f_2$. Folglich sind die Spannungen $U_1$ und $U_3$, welche den symmetrisch zur Mitte des Frequenzspektrums liegenden Spektralbereichen $f_1$ und $f_3$ zugeordnet sind, gleich groß und ihre Differenz $U_4$ ist Null, wodurch die Resonanzfrequenz $f_r$ des Resonanzentzerrers durch das Steuersignal $U_5$ nicht gegenüber der Mittenfrequenz $f_2$ verschoben wird. Da jedoch die Spannung $U_2$, welche dem mittleren Spektralbereich $f_2$ zugeordnet ist, abgesunken ist, während sich der Mittelwert aus den Spannungen $U_1$ und $U_3$ nur wenig verändert hat, entsteht ein Differenzsignal $U_6$ am Ausgang der Subtraktionschaltung 12. Dieses Differenzsignal $U_6$ wird an den Steuereingang b des Resonanzentzerrers durchgeschaltet und erhöht dessen Güte Q, bis die Differenz zwischen dem Mittelwert der Spannungen $U_1$, $U_3$ und der Spannung $U_2$ zu Null wird, d. h. das Frequenzspektrum A(f) einen entzerrten Verlauf aufweist.

Tritt eine Dämpfungsverzerrung D(f) im Übertragungskanal auf, deren Maximum, wie Figur 4 zeigt, nicht bei der Mittenfrequenz, aber innerhalb des Frequenzbereiches zwischen den seitlichen Spektralbereichen $f_1$ und $f_3$ liegt, entsteht aufgrund des unsymmetrisch verzerrten Frequenzspektrums A(f) ein Differenzsignal $U_4$ aus den beiden ungleichen Spannungen $U_1$ und $U_3$, welche den seitlichen Spektralbereichen $f_1$ und $f_3$ des Frequenzspektrums zugeordnet sind. Das Differenzsignal $U_4$, welches als Steuersignal $U_5$ an den Eingang a des Resonanzentzerrers 1 gelangt, bewirkt eine Verschiebung der Resonanzfrequenz $f_r$ soweit, bis das Differenzsignal $U_4$ selbst verschwindet. Die Steuerung der Güte Q des Resonanzentzerrers 1 erfolgt auf die gleiche Weise wie im Zusammenhang mit Figur 3 geschildert.

In Figur 5 ist schließlich der Fall dargestellt, daß das Maximum der Dämpfungsverzerrung D(f) außerhalb des durch die Spektralbereiche $f_1$ und $f_3$ begrenzten Frequenzbereichs liegt. Das dabei durch die unterschiedlichen Spannungen $U_1$ und $U_3$ entstehende Steuersignal $U_5$ verschiebt die Resonanzfrequenz $f_r$ in Richtung auf den seitlichen Spektralbereich $f_3$. Auf Grund der Begrenzung des Differenzsignals $U_4$ durch den Begrenzer 10 vermag das Steuersignal $U_5$ aber nicht die Resonanzfrequenz $f_r$ über die Frequenz $f_3$ hinaus zu verschieben. Da also in diesem Fall die Differenz zwischen den Spannungen $U_1$ und $U_3$ nicht mehr auf Null zurückgeregelt werden kann, bleibt eine große Differenzspannung $U_4$ bestehen. Der im Schaltblock 13 gebildete Betrag dieser Differenzspannung $U_4$ ist dann größer als die Differenz $U_6$ zwischen dem Mittelwert der Spannungen $U_1$, $U_3$ und der Spannung $U_2$. Weil der Schaltblock 14 jeweils das größte der beiden Differenzsignale an den Steuereingang b des Resonanzentzerrers durchschaltet, wird die Güte Q durch den Betrag der Differenz $U_4$ zwischen den Spannungen $U_1$ und $U_3$ gesteuert und nicht wie im Normalfall durch die Differenz $U_6$ zwischen dem Mittelwert der Spannungen $U_1$, $U_3$ und der Spannung $U_2$. Die Güte Q des Resonanzentzerrers 1 wird jetzt soweit erhöht, bis das Differenzsignal $U_4$ auf den Wert zurückgegangen ist, bei welchem der Begrenzer 10 gerade anspricht. In diesem Zustand ist der Regelkreis wieder stabilisiert.

## Patentansprüche

1. Verfahren zum automatischen Steuern der Resonanzfrequenz und Güte eines Resonanzentzerrers, wobei aus dem übertragenen Signalspektrum am Entzerrerausgang Proben aus mindestens drei verschiedenen vorbestimmten Frequenzbereichen ($f_1$, $f_2$, $f_3$) entnommen werden, von denen der eine in der Mitte des übertragenen Signalspektrums liegt und die anderen symmetrisch zu beiden Seiten der Mittenfrequenz ($f_2$) liegen, dann aus zwei von den beiden Proben der symmetrisch zur Mittenfrequenz ($f_2$) liegenden Frequenzbereiche ($f_1$, $f_3$) abgeleiteten Steuergrößen ($U_1$, $U_3$) eine erste Differenz ($U_4$) gebildet wird und außerdem aus dem Mittelwert der beiden Steuergrößen ($U_1$, $U_3$) und aus einer Steuergröße ($U_2$), die aus der Probe des in der Mitte des Signalspektrums liegenden Frequenzbereiches ($f_2$) abgeleitet ist, eine zweite Differenz ($U_6$) gebildet wird, dadurch gekennzeichnet, daß die erste Differenz ($U_4$) auf einen maximal zulässigen positiven bzw. negativen Wert begrenzt und schließlich dem Steuereingang (a) für die Resonanzfrequenz ($f_r$) des Resonanzentzerrers (1) zugeführt wird, und daß entweder der Betrag der ersten Differenz ($U_4$) oder die zweite Differenz ($U_6$) zum Steuereingang (b) für die Güte (Q) des Resonanzentzerrers (1) durchgeschaltet wird, und zwar jeweils die größere der beiden Differenzen ($U_4$, $U_6$).

2. Verfahren nach Anspruch 1, dadurch gekennzeichnet, daß der maximale positive bzw. negative Begrenzungswert für die Differenz ($U_4$) der aus den Proben der symmetrisch zur Mittenfrequenz ($f_2$) liegenden Frequenzbereiche ($f_1$, $f_3$) abgeleiteten Steuergrößen ($U_1$, $U_3$) so gewählt wird, daß die Resonanzfrequenz ($f_r$) des Resonanzentzerrers (1) nur innerhalb eines Frequenzbereiches verändert werden kann, der von den symmetrisch zur Mittenfrequenz ($f_2$) liegenden Frequenzbereichen ($f_1$, $f_3$) begrenzt ist.

## Claims

1. A method for automatic control of the resonant frequency and quality of a resonant equalizer, wherein from the transmitted signal spectrum at the equalizer output, samples are taken from at least 3 different predetermined

frequency ranges ($f_1$, $f_2$, $f_3$), of which one is located in the middle of the transmitted signal spectrum and the others are located symmetrically on both sides of the center frequency ($f_2$), then a first difference ($U_4$) is formed from two control variables ($U_1$, $U_3$) derived from the two samples of the frequency ranges ($f_1$, $f_3$) located symmetrically with respect to the middle frequency ($f_2$), and moreover a second difference ($U_6$) is formed from the mean value of the two control variables ($U_1$, $U_3$) and from a control variable ($U_2$) which is derived from the sample of the frequency range ($f_2$) located in the middle of the signal spectrum, characterized in that the first difference ($U_4$) is limited to a maximum allowable positive or negative value and is finally delivered to the control input (a) for the resonant frequency ($f_r$) of the resonant equalizer (1), and that the amount of either the first difference ($U_4$) or the second difference ($U_6$) is switched through to the control input (b) for the quality (Q) of the resonant equalizer (1), in each case the value switched through being the greater of the two differences ($U_4$, $U_6$).

2. A method as defined by claim 1, characterized in that the maximum positive or negative limiting value for the difference ($U_4$) of the control variables ($U_1$, $U_3$) derived from the samples of the frequency ranges ($f_1$, $f_3$) located symmetrically with respect to the middle frequency ($f_2$) is selected such that the resonant frequency ($f_r$) of the resonant equalizer (1) can be varied only within a frequency range that is limited by the frequency ranges ($f_1$, $f_3$) located symmetrically with respect to the middle frequency ($f_2$).

**Revendications**

1. Procédé de commande automatique de la fréquence de résonance et de la qualité d'un égalisateur à résonance, dans lequel, à partir du spectre de signaux transmis à la sortie de l'égalisateur, on prélève des échantillons d'au moins trois zones de fréquences prédéterminées différentes ($f_1$, $f_2$, $f_3$) dont l'une est située au milieu du spectre de signaux transmis et dont les autres sont situées symétriquement par rapport aux deux côtés de la fréquence médiane ($f_2$) ; puis, à partir des deux grandeurs de commande ($U_1$, $U_3$) dérivées des deux échantillons des zones de fréquence ($f_1$, $f_3$) situées symétriquement par rapport à la fréquence médiane ($f_2$), on forme une première différence ($U_4$) et, de plus, à partir de la valeur moyenne des deux grandeurs de commande ($U_1$, $U_3$) et d'une grandeur de commande ($U_2$) dérivée de l'échantillon de la zone de fréquence ($f_2$) située au milieu du spectre de signaux, on forme une seconde différence ($U_6$), caractérisé en ce que la première différence ($U_4$) est limitée à une valeur maximale autorisée, positive ou négative, et est finalement amenée à l'entrée de commande (a) pour la fréquence de référence ($f_r$) de l'égalisateur à résonance (1) ; et en ce que l'on transmet à l'entrée de commande (b) pour la qualité (Q) de l'égalisateur à résonance (1) soit la valeur de la première différence ($U_4$) soit la seconde différence ($U_6$), et, de façon plus précise, chaque fois la plus grande des deux différences ($U_4$, $U_6$).

2. Procédé selon la revendication 1, caractérisé en ce que l'on choisit la valeur limite maximale, positive ou négative, pour la différence ($U_4$) des grandeurs de commande ($U_1$, $U_3$) dérivées des échantillons des zones de fréquence ($f_1$, $f_3$), situées symétriquement par rapport à la fréquence médiane (2) de façon telle que la fréquence de résonance ($f_r$) de l'égalisateur à résonance (1) ne puisse être modifiée qu'à l'intérieur d'une zone de fréquence qui est limitée par les zones de fréquence ($f_1$, $f_3$) situées symétriquement par rapport à la fréquence médiane ($f_2$).

FIG.1

FIG. 2

FIG. 3          FIG. 4          FIG. 5

EP 0 184 618 B1